# EUROPÄISCHE PATENTSCHRIFT

(11) **EP 2 553 384 B1**
(45) Veröffentlichungstag und Bekanntmachung des Hinweises auf die Patenterteilung: **07.08.2019**
(21) Anmeldenummer: 11704786.0
(22) Anmeldetag: 22.02.2011
(51) Int. Cl.: G01B 11/275, G01V 8/20

(54) **VERFAHREN ZUR STEUERUNG EINES MESSSYSTEMS UND MESSSYSTEM ZUR DURCHFÜHRUNG DES VERFAHRENS**
METHOD FOR CONTROLLING A MEASURING SYSTEM AND MEASURING SYSTEM FOR CARRYING OUT THE METHOD
PROCÉDÉ DE COMMANDE D'UN SYSTÈME DE MESURE, ET SYSTÈME DE MESURE POUR LA MISE EN OEUVRE DE CE PROCÉDÉ

(30) Priorität: 29.03.2010 DE 102010003389
(43) Veröffentlichungstag der Anmeldung: 06.02.2013
(73) Patentinhaber: Beissbarth GmbH, 80993 München (DE)
(72) Erfinder: SEIFERT, Wolfgang, 82407 Wielenbach (DE)
(74) Vertreter: Schmitt-Nilson Schraud Waibel Wohlfrom Patentanwälte Partnerschaft mbB
(86) Internationale Anmeldenummer: PCT/EP2011/052595
(87) Internationale Veröffentlichungsnummer: WO 2011/120739

(56) Entgegenhaltungen:
- DE-A1- 2 727 420
- DE-A1-102006 041 821
- JP-A- 59 005 906
- US-B1- 6 442 503

## Beschreibung

Die Erfindung betrifft ein Verfahren zur Steuerung eines Messsystems an einem Messplatz einer Fahrwerksvermessungseinrichtung oder einer Kraftfahrzeugprüfstrasse und ein Messsystem zur Durchführung des Verfahrens nach dem Oberbegriff der unabhängigen Ansprüche.

### Stand der Technik

Aus DE 10 2006 041 821 A1 ist bereits ein Verfahren zur relativen Positionierung eines Messgegenstands und eines Kraftfahrzeugs zu einem Messgerät bekannt. Bei diesem Verfahren wird zunächst der Messgegenstand durch das Messgerät erkannt und die Position des Messgegenstandes zum Messgerät ermittelt. Dann wird ein Rückmeldesignal erzeugt, dass angibt, ob sich der Messgegenstand in einer für die Vermessung geeigneten Position befindet oder nicht. Durch weitere Rückmeldesignale kann der Messgegenstand in eine für die Achsvermessung geeignete Position gebracht werden. Bei diesem Verfahren werden die Messkameras gleichzeitig für die Raderkennung und Radvermessung der Kraftfahrzeuge eingesetzt. Das Messsystem wird schon lange vor der eigentlichen Achsvermessung eingeschaltet und muss bis zur Raderkennung in regelmäßigen Abständen Bilder aufnehmen und auswerten. Hierbei werden die Beleuchtung des Messgegenstandes sowie die Rechentechnik des Messgerätes und einer Auswerteeinheit stark gefordert, was einen erhöhten Energieverbrauch bedeutet und einen Akkubetrieb der Messwertaufnehmer erschwert. Da die Raderkennungs- und Radvermessungsalgorithmen in der Regel unterschiedlich sind, müssen die für die Raderkennung aufgenommenen Bilder zwischengespeichert werden, um auch für die Radvermessung genutzt werden zu können, was bei dem bekannten Verfahren außerdem zu einem erhöhten Speicherbedarf in der Auswerteeinrichtung führt.

In DE 27 27 420 A1 und JP 59 005906 A sind weitere Verfahren gezeigt, in denen durch eine einzelne Detektiereinheit ein Betriebszustand einer Messeinrichtung aktiviert wird.

### Offenbarung der Erfindung

Das erfindungsgemäße Verfahren mit den kennzeichnenden Merkmalen des Anspruchs 1 und das erfindungsgemäße Messsystem mit den kennzeichnenden Merkmalen des Anspruchs 7 hat dem gegenüber den Vorteil, dass das Kraftfahrzeug und die relative Position des Kraftfahrzeugs zu mindestens einem Messgerät durch eine erste Detektiereinheit erkannt wird und das Messgerät erst durch ein Signal dieser Detektiereinheit durch die Quer- und Längsreferenziereinheiten kalibriert wird. Dadurch wird das Messgerät nur kalibriert, wenn es erforderlich ist. Auf Grund wenigstens eines dem wenigstens einen ersten Signal zeitlich nachgeordneten zweiten Signals einer in Einfahrtsrichtung zweiten Detektiereinheit wird die Bildaufnahme der Bildaufnahmeeinheit an mindestens zwei gegenüberliegenden Messgeräten gestartet.

Das Messsystem muss bei der Durchführung eines erfindungsgemäßen Verfahrens bis zur Raderkennung nicht ständig Bilder aufnehmen und auswerten. Dadurch wird weniger Energie verbraucht und das Messsystem wäre auch für einen Akkubetrieb nutzbar. Durch das mehrmalige Detektieren des Kraftfahrzeuges im Messsystem, lässt sich die Position des Kraftfahrzeuges genauer bestimmen und mit der Bildaufnahme zur Achsvermessung kann später begonnen werden, was eine noch höhere Energieeinsparung und einen noch geringere Rechnerauslastung bedeutet.

Mit den Maßnahmen der Unteransprüche sind vorteilhafte Weiterbildungen und Verbesserungen der Erfindung möglich.

Eine vorteilhafte Weiterbildung des Verfahrens umfasst das automatische Beenden der Bildaufnahme an den Messgeräten. Verlässt das Kraftfahrzeug nach der Achsvermessung den Messplatz, so kann durch ein weiteres Signal einer ersten oder zweiten Detektiereinheit die Messung beendet werden. Dies bringt den Vorteil mit sich, dass nur Bilder, die zur Achsvermessung benötigt werden, von den Kameras aufgenommen werden, so dass nicht unnötig viele Bilder aufgenommen werden, die Speicherkapazitäten des Rechners nicht unnötig belastet werden und der Energiebedarf weiter reduziert wird.

Ein weiterer Vorteil lässt sich durch die Bestimmung der Richtung und Geschwindigkeit des Kraftfahrzeuges anhand der Signale von mindestens zwei in Einfahrtsrichtung des Kraftfahrzeugs hintereinander angeordneter Detektiereinheiten erzielen. Dies ermöglicht es auch, einem Bediener, der sich nicht an der Kraftfahrzeugprüfstrasse befindet, genauere Informationen über den Ablauf und die korrekte Umsetzung der Messung bereitzustellen.

Eine vorteilhafte Weiterbildung, die sich aus der Berechnung der Richtung und der Geschwindigkeit des Kraftfahrzeugs ergibt, ist die einfachere Bestimmung eines Zeitfensters für die Aktivierung der Bildaufnahmeeinheit. Durch die Bestimmung eines Zeitfensters kann die Messung auch ohne ein weiteres Signal durch die Detektiereinheiten beendet werden und es können unnötige Bildaufnahmen vermieden werden. Außer dem Zeitfenster für die Bildaufnahmen lässt sich aus der Geschwindigkeit auch eine optimale Frequenz für die Bildaufnahme bestimmen, so dass die Anzahl der Bildaufnahmen und die Anzahl der Beleuchtungen der Räder mit den Signalen der Detektiereinheiten optimiert werden.

Ein weiterer Vorteil ergibt sich durch eine Plausibilitätsprüfung mit Hilfe der Datensätze für Richtung und Geschwindigkeit eines Kraftfahrzeugs oder eines anderen Gegenstandes. Hierbei wird kontrolliert, ob sich ein Kraftfahrzeug, ein anderer Gegenstand oder eine Person auf dem Messplatz befindet. Somit kann der Beginn einer unerwünschten Kalibrierung des Messsystems und der Beginn einer unerwünschten Messung mit den Bildaufnahmeeinheiten vermieden werden.

Besonders vorteilhaft lässt sich das erfindungsgemäße Verfahren in bestehende Messsysteme von Achsvermessungseinrichtungen implementieren, indem die Querreferenziereinheiten gleichzeitig als Detektiereinheiten genutzt werden, wobei eine Referenzkamera der Querreferenziereinheit des einen Messgeräts den Empfänger und mindestens eine als Referenztarget ausgebildete LED des gegenüberliegenden Messgerätes den Sender einer Lichtschranke bilden. Dadurch können die bereits vorhandenen Querreferenziereinheiten in einem Messsystem zur Achsvermessung als Lichtschranken oder Detektiereinheiten genutzt werden, welches den Vorteil hat, dass keine zusätzlichen Bauteile als Detektiereinheit ergänzt werden müssen.

Dabei bietet sich als besonders vorteilhafte Ausführungsform an, eine in Einfahrtrichtung des Kraftfahrzeugs erste Lichtschranke von zwei gegenüberliegenden Messgeräten, welche die Bildaufnahmeeinheit für die hinteren Räder des Kraftfahrzeugs enthalten, und eine in Einfahrtrichtung des Kraftfahrzeugs zweite Lichtschranke von zwei sich gegenüberliegenden Messgeräten, welche die Bildaufnahmeeinheit für die vorderen Räder enthalten, zu nutzen.

Eine vorteilhafte Weiterentwicklung des Messsystems ergibt sich durch eine Detektiereinheit, die in Einfahrtsrichtung des Kraftfahrzeugs hinter einem oder zwei gegenüberliegenden Messgeräten angeordnet ist, und dass anhand eines Signals der Detektiereinheit die Kalibrierung und/oder Bildaufnahme beendet werden/wird. Durch die Unterbrechung einer Lichtschranke, die die Detektiereinheit darstellt, durch ein Kraftfahrzeug wird die Messung beendet und es kann sichergestellt werden, dass keine unnötigen Rechnerkapazitäten benötigt werden, dass keine unnötige Energie verbraucht wird und dass die Bauteile der Messgeräte unnötig belastet werden.

Darüber hinaus kann die Auslösung eines Betriebszustandes durch eine Detektiereinheit, die z. B. durch eine Lichtschranke oder einen Ultraschallsensor realisiert werden kann, an der Einfahrt zum Messplatz erfolgen. Hier bietet es sich an, eine solche Detektiereinheit beispielsweise in eine oder beide vordere Messgeräte zu integrieren. Bei der Ersteinrichtung des Messsystems wird dann die Position der Detektiereinheit relativ zu mindestens einem Messgerät in der Auswerteeinheit des Messsystems festgehalten.

### Ausführungsbeispiele

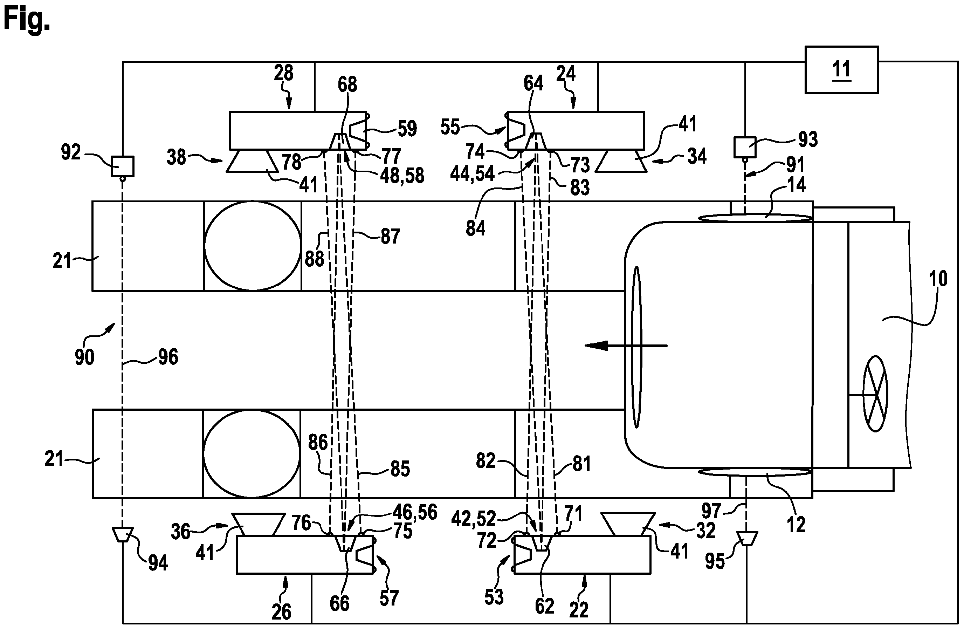

Die Erfindung wird anhand der Zeichnung und der nachfolgenden Beschreibung näher erläutert. Die Figur zeigt eine schematische Ansicht eines Messplatzes einer Fahrwerksvermessungseinrichtung für ein Messsystem zur Fahrwerksvermessung eines Kraftfahrzeuges.

Der dargestellte Messplatz zeigt ein Kraftfahrzeug 10, welches auf dem Messplatz zur Vermessung seines Fahrwerks angeordnet ist. Das Kraftfahrzeug 10 verfügt über ein vorderes linkes Rad 12, über ein vorderes rechtes Rad 14, sowie über ein hinteres linkes Rad und über ein hinteres rechtes Rad, die in der Figur nicht dargestellt sind.

Der Messplatz weist zwei längliche Aufstandsflächen 21 mit Dreh- und Schiebeplatten als Aufstandsflächen für die vorderen Räder 12, 14 und die hinteren, nicht dargestellten Räder auf. Diese länglichen Aufstandsflächen 21 sind bei Hebebühnen als Fahrschienen und bei Gruben als Auffahrfläche ausgebildet.

Am Messplatz sind vier Messgeräte 22, 24, 26, 28 angeordnet, wobei das Messgerät 22 für das hintere linke Rad, das Messgerät 24 für das hintere rechte Rad, das Messgerät 26 für das vordere linke Rad 12 und das Messgerät 28 für das vordere rechte Rad 14 eingesetzt wird. Die Messgeräte 22, 24, 26, 28 verfügen jeweils über eine Bildaufnahmeeinheit 32, 34, 36, 38, eine Querreferenziereinheit 52, 54, 56, 58 sowie eine Längsreferenziereinheit 53, 55, 57, 59 . Die Bildaufnahmeeinheiten 32, 34, 36, 38 weisen jeweils mindestens eine Messkamera 41 und jeweils mindestens einen nicht näher dargestellten Messsignalgeber auf.

Die Querreferenziereinheiten 52, 54, 56, 58 und die Längsreferenziereinheiten 53, 55, 57, 59 dienen zur optischen Vermessung der relativen Winkellagen und Abstände der Messgeräte 22, 24, 26, 28 zueinander. Mit diesen Referenziereinheiten genügt eine grobe Aufstellung der Messgeräte 22, 24, 26, 28 für eine genaue Bestimmung der relativen Lagen und Abstände der Messgeräte 22, 24, 26, 28 zueinander. Diese können laufend gemessen und auch nachjustiert werden. Die Funktion eines derartigen Messplatzes ist bspw. aus der DE 10 2004 013 441 A1 bekannt.

Jede Querreferenziereinheit 52, 54, 56, 58 besitzt mindestens eine Referenzierkamera 62, 64, 66, 68 und mindestens ein Referenziertarget.

In der Figur sind die Referenziertargets an jeder Querreferenziereinheit 52, 54, 56, 58 durch LEDs 71, 72, 73, 74, 75, 76, 77, 78 ausgebildet, wobei jede Querreferenziereinheit 52, 54, 56, 58 im vorliegenden Ausführungsbeispiel jeweils zwei LEDs 71, 72, 73, 74, 75, 76, 77, 78 für die gegenüberliegende Referenzierkamera 62, 64, 66, 68 aufweist. In der Figur wird die linke hintere Querreferenziereinheit 52 durch die Referenzierkamera 62 und die LEDs 71, 72 gebildet. Die LEDs 71, 72 senden zwei Lichtstrahlen 81, 82 aus, die von der gegenüberliegenden Referenzierkamera 64 aufgenommen werden. Die rechte hintere Querreferenziereinheit 54 wird durch die Referenzierkamera 64 und die LEDs 73, 74 gebildet. Die LEDs 73, 74 senden zwei Lichtstrahlen 83, 84 aus, die von der gegenüberliegenden Referenzierkamera 62 aufgenommen werden. Die linke vordere Querreferenziereinheit 56 wird durch die Referenzierkamera 66 und die LEDs 75, 76 gebildet. Die LEDs 75, 76 senden zwei Lichtstrahlen 85, 86 aus, die von der gegenüberliegenden Referenzierkamera 68 aufgenommen werden. Die rechte vordere Querreferenziereinheit 58 wird durch die Referenzierkamera 68 und die LEDs 77, 78 gebildet. Die LEDs 77, 78 senden zwei Lichtstrahlen 87, 88 aus, die von der gegenüberliegenden Referenzierkamera 66 aufgenommen werden.

Der Messplatz verfügt über Detektiereinheiten 42, 44, 46, 48, 90, 91 in der Art, ob ein Kraftfahrzeug 10 eine bestimmte Position innerhalb des Messplatzes eingenommen und/oder ein anderes Objekt sich im Messplatz befindet und/oder eine Bedienperson den Messplatz betreten hat.

Gemäß einem ersten Ausführungsbeispiel werden die Detektiereinheiten 42, 44, 46, 48 von den Querreferenziereinheiten 52, 54, 56, 58 gebildet. Dabei wird das optische Wirkprinzip zwischen den gegenüberliegenden LEDs 71, 72, 73, 74, 75, 76, 77, 78 und Referenzierkameras 62, 64, 66, 68 der Quereferenziereinheiten 52, 54, 56, 58 als Lichtschranke genutzt.

Die Querreferenziereinheiten 52, 54 der Messgeräte 22, 24 für die hinteren Räder sind in Einfahrtrichtung hinter den Messkameras 41 und den entsprechenden Messsignalgebern angeordnet, die Querreferenziereinheiten 56, 58 der Messgeräte 26, 28 für die vorderen Räder 12, 14 sind in Einfahrtrichtung vor den Messkameras 41 angeordnet. Es können aber auch andere Positionen der Querreferenziereineiten 52, 54, 56, 58 zu den Messkameras 41 gewählt werden. Dabei bilden die Querreferenziereinheiten 52, 54 der Messgeräte 22, 24 die in Einfahrtrichtung des Kraftfahrzeug 10 erste Detektiereinheit 42, 44 und die Querreferenziereinheiten 56, 58 der Messgeräte 26, 28 die in Einfahrtsrichtung zweite Detektiereinheit 46, 48 .

Die Messgeräte 22, 24, 26, 28 sind mit einer Auswerteeinheit 11, insbesondere einem Werkstattrechner verbunden. Der Werkstattrechner ermöglicht einen Signalaustausch zwischen den Querreferenziereinheiten 52, 54, 56, 58, den Längsreferenziereinheiten 53, 55, 57, 59, den Bildaufnahmeeinheiten 32, 34, 36, 38 sowie den nicht dargestellten Messsignalgebern, in der Art, dass mit von den Detektiereinheiten 42, 44, 46, 48, 90, 91 gelieferten Signalen ein Betriebszustand aktiviert werden kann. Die Aktivierung eines Betriebszustandes umfasst mindestens einen der folgenden Vorgänge:
a) die Messgeräte 22, 24, 26, 28 werden, durch die Quer- und Längsreferenziereinheiten 51, 52, 53, 54, 55,56, 57, 58, 59 kalibriert,
b) die Bildaufnahme wird durch die Bildaufnahmeeinheit 32, 34, 36,38 in einen Bereitschaftszustand (Stand-by-Betrieb) versetzt,
c) die Bildaufnahmeparameter der Bildaufnahmeeinheiten 32, 34, 36,38 werden an die Umgebungsbedingungen angepasst,
d) die Bildaufnahme durch die Bildaufnahmeeinheiten 32, 34, 36,38 wird in Betrieb oder außer Betrieb genommen.

In einer alternativen Ausführung sind die Messgeräte 22, 24, 26, 28 untereinander verbunden, wobei die Messgeräte 22, 24, 26, 28 jeweils Auswerteeinheiten 11 enthalten und in einer Master-Slave-Konfiguration zusammenarbeiten. Hierbei kann das Master-Messgerät die Funktion des Werkstattrechners übernehmen.

Im Folgenden wird ein Verfahren zur Steuerung eines Messsystems am Messplatz einer Fahrwerksvermessungseinrichtung erläutert.

Neben dem in der Figur gezeigten Ausführungsbeispiel einer Fahrwerksvermessungseinrichtung mit vier Messgeräten 22, 24, 26, 28 ist es auch möglich nur zwei zueinander quer zur Einfahrtrichtung des Kraftfahrzeuges gegenüberliegende Messgeräte 22, 24 oder 26, 28 vorzusehen. Die in der Figur gezeigten Messgeräte 22, 24, 26, 28 arbeiten berührungslos und targetlos auf der Grundlage einer optischen Vermessung, indem von den nicht dargestellten Messsignalgebern ein Beleuchtungsmuster zumindest auf das zu vermessende Rad projiziert wird und das Beleuchtungsmuster von den Messkameras 41 aufgenommen und von der Auswerteeinheit 11 in Raumkoordinaten zur Bestimmung der Lage (Spur, Sturz) des Rades umgerechnet werden. Das Verfahren kann genauso auch bei berührungslosen und targetgebundenen Messsystemen eingesetzt werden.

Vor Beginn des Verfahrens werden die Querreferenziereinheiten 52, 54, 56, 58 eingeschaltet. Dieses Einschalten erfolgt entweder direkt am Messgerät oder in dem Fall, dass mehrere Messgeräte 22, 24, 26, 28 vorgesehen sind, an den zur Messung bestimmten jeweiligen Messgeräten 22, 24, 26, 28 . Ebenso kann in dem Fall, dass mehrere Messgeräte 22, 24, 26, 28 vorgesehen sind, der Einschaltvorgang von einem Messgerät aus gesteuert werden, so dass nur ein Messgerät vom Benutzer aus angeschaltet werden braucht. Alternativ dazu kann das Einschalten auch an einer Auswerteeinheit 11, insbesondere an einem Werkstattrechner erfolgen, der mit dem Messgerät oder den Messgeräten 22, 24, 26, 28 verbunden ist.

In einem Verfahren, das nicht Teil der beanspruchten Erfindung ist, wird der Messplatz durch die in Einfahrtrichtung des Kraftfahrzeuges 10 ersten gegenüberliegenden Quereferenziereinheiten 52 und 54 (erste Detektiereinheit 42, 44) überwacht. Die jeweiligen Referenziertargets (LEDs) 71, 72, 73, 74 senden ein kontinuierliches oder periodisches Lichtsignal, welches von einen oder mehreren Lichtstrahlen 81, 82, 83, 84 dargestellt wird. Das Lichtsignal wird von den zugehörigen Referenzierkameras 62, 64 aufgenommen. Das Kraftfahrzeug 10 bewegt sich auf den Aufstandsflächen 21 in Einfahrtrichtung nach vorn und verdunkelt nach einer gewissen Wegstrecke das Lichtsignal der ersten gegenüberliegenden Querreferenziereinheiten 52 und 54 . Durch die Unterbrechung des Lichtsignals wird von der Auswerteeinheit 11 ein Signal an ein oder an mehrere Messgeräte 22, 24, 26, 28 übermittelt und die Messgeräte 22, 24, 26, 28 werden zunächst mittels der Quer- und Längsreferenziereinheiten kalibriert. Des Weiteren wird nach der Kalibrierung der Messgeräte 22, 24, 26, 28 eine oder mehrere Bildaufnahmeeinheiten 32, 34, 36, 38 in Betrieb genommen und die vorderen Räder 12, 14 und/oder hinteren Räder des Kraftfahrzeuges 10 vermessen.

Bei dem oben beschriebenen Verfahren kann der Messplatz auch durch die in Einfahrtrichtung des Kraftfahrzeuges 10 zweiten gegenüberliegenden Querreferenziereinheiten 56, 58 überwacht werden. Die jeweiligen Referenziertargets (LEDs) 75, 76, 77, 78 senden ein kontinuierliches oder periodisches Lichtsignal, welches von einem oder mehreren Lichtstrahlen 85, 86, 87, 88 gebildet und von den zugehörigen Referenzierkameras 66, 68 aufgenommen wird. Das Kraftfahrzeug 10 bewegt sich auf den Aufstandsflächen 21 in Einfahrtrichtung nach vorn und verdunkelt nach einer gewissen Wegstrecke das Lichtsignal der Querreferenziereinheiten 56 und 58 . Durch die Unterbrechung des Lichtsignals der Querreferenziereinheiten 56 und 58 wird ein Signal an ein oder mehrere Messgeräte 22, 24, 26, 28 übermittelt und die Kalibrierung der Messgeräte 22, 24, 26, 28 wird durchgeführt. Des Weiteren wird durch das Signal nach der Kalibrierung das entsprechende Messgerät zur Messung mit den Bildaufnahmeinheiten 32, 34, 36, 38 in Betrieb genommen und die vorderen Räder 12, 14 und/oder hinteren Räder des Kraftfahrzeuges 10 vermessen.

In einem erfindungsgemäßen Verfahren wird der Messplatz durch die in Einfahrtrichtung des Kraftfahrzeugs 10 ersten gegenüberliegenden Querreferenziereinheiten 52 und 54 und die in Einfahrtrichtung des Kraftfahrzeugs 10 zweiten gegenüberliegenden Querreferenziereinheiten 56 und 58 überwacht. Die Referenziertargets (LEDs) 71, 72, 73, 74 der in Einfahrtrichtung ersten Querrefereneziereinheiten 52 und 54 senden ein kontinuierliches oder periodisches erstes Lichtsignal, welches von einem oder mehreren Lichtstrahlen 81, 82, 83, 84 gebildet und von den zugehörigen Referenzierkameras 62, 64 aufgenommen wird. Die Referenziertargets (LEDs) 75, 76, 77, 78 der in Einfahrtsrichtung des Kraftfahrzeugs 10 zweiten Querrefereneziereinheiten 56 und 58 senden ein kontinuierliches oder periodisches zweites Lichtsignal, welches von einem oder mehreren Lichtstrahlen 85, 86, 87, 88 gebildet wird, und von den zugehörigen Referenzierkameras 66, 68 aufgenommen wird. Das Kraftfahrzeug 10 bewegt sich auf den Aufstandsflächen 21 in Einfahrtrichtung nach vorn und verdunkelt nach einer gewissen Wegstrecke das erste Lichtsignal der Querreferenziereinheiten 52 und 54 . Durch die Unterbrechung der Lichtstrahlen wird ein erstes Signal an ein oder mehrere Messgeräte 22, 24, 26, 28 übermittelt und die Messgeräte 22, 24, 26, 28 werden in einen Bereitschaftszustand versetzt, des Weiteren werden die Messgeräte 22, 24, 26, 28 kalibriert. Bewegt sich das Kraftfahrzeug 10 auf den Aufstandsflächen 21 weiter in Einfahrtrichtung nach vorn und verdunkelt das zweite Lichtsignal der Querreferenziereinheiten 56 und 58 wird ein zweites Signal an ein oder mehrere Messgeräte 22, 24, 26, 28 übermittelt. Durch das zweite Signal wird die Messung mit den Bildaufnahmeeinheiten 32, 34, 36, 38 gestartet, so dass die vorderen Räder 12, 14 und die nicht dargestellten hinteren Räder des Kraftfahrzeuges 10 vermessen werden können.

Ein anderes Verfahren zum Starten der Messungen mit den Bildaufnahmeeinheiten 32, 34, 36, 38 und zum Starten der Kalibrierung durch die Längs- und Querreferenziereinheiten 52, 53, 54, 55, 56, 57, 58, 59, das nicht Teil der beanspruchten Erfindung ist, bietet sich durch die Installation der Detektiereinheit 91 vor zwei gegenüberliegenden Messgeräten 22, 24, 26, 28 an. Diese Detektiereinheit 91 hat mindestens einen Sender 93 und einen Empfänger 95 und ist über die Auswerteeinheit 11 mit den Bildaufnahmeeinheiten 32, 34, 36, 38 und den Längs- und Querreferenziereinheiten 52, 53, 54, 55, 56, 57, 58, 59 verbunden. Die Detektiereinheit 91 kann beispielsweise als Lichtschranke oder Ultraschallsensor ausgeführt sein. In der Figur ist die Detektiereinheit 91 in Einfahrtrichtung des Kraftfahrzeuges 10 vor den für die Vermessung der nicht dargestellten hinteren Räder vorgesehenen Messgeräten 22, 24 installiert. Bewegt sich das Kraftfahrzeug 10 auf die Aufstandsflächen 21 des Messplatz in Einfahrtsrichtung nach vorn, wird mindestens ein Signalstrahl 97 der Detektiereinheit 91 verändert bzw. unterbrochen und ein Startsignal an die Messgeräte 22, 24, 26, 28 gegeben, welches zum Starten der Messung mit den Bildaufnahmeeinheiten 32, 34, 36, 38 und zum Starten der Kalibrierung durch die Längs- und Querreferenziereinheiten 52, 53, 54, 55, 56, 57, 58, 59 genutzt wird.

Durch einen weiteren Verfahrensschritt lässt sich die Messung der Bildaufnahmeeinheiten 32, 34, 36, 38 beenden. Hierbei wird der Messplatz auch während der Achsvermessung mit den Bildaufnahmeeinheiten 32, 34, 36, 38 durch die ersten Querreferenziereinheiten 52, 54. und/oder die zweiten Querreferenziereinheiten 56, 58 überwacht. Bewegt sich das Kraftfahrzeug 10 auf den Aufstandsflächen 21 nach vorn vom Messplatz herunter wird einer oder mehrere der Lichtstrahlen 81, 82, 83, 84, 85, 86, 87, 88 durch die nicht dargestellten hinteren Räder erneut verdunkelt. Dadurch wird ein abschließendes Signal an die Messgeräte 22, 24, 26, 28 gegeben, welches zum Beenden der Messung mit den Bildaufnahmeeinheiten 32, 34, 36, 38 und zum Beenden der Kalibrierung durch die Längs- und Querreferenziereinheiten 52, 53, 54, 55, 56, 57, 58, 59 genutzt wird.

Ein anderes Verfahren zum Beenden der Messungen mit den Bildaufnahmeeinheiten 32, 34, 36, 38 und zum Beenden der Kalibrierung durch die Längs- und Querreferenziereinheiten 52, 53, 54, 55, 56, 57, 58, 59 bietet sich durch die Installation der Detektiereinheit 90 hinter zwei gegenüberliegenden Messgeräten 22, 24, 26, 28 an. Diese Detektiereinheit 90 hat mindestens einen Sender 92 und einen Empfänger 94 und ist über die Auswerteeinheit 11 mit den Bildaufnahmeeinheiten 32, 34, 36, 38 und den Längs- und Querreferenziereinheiten 52, 53, 54, 55, 56, 57, 58, 59 verbunden. Die Detektiereinheit 90 kann beispielsweise als Lichtschranke oder Ultraschallsensor ausgeführt sein. In der Figur ist die Detektiereinheit 90 in Einfahrtrichtung des Kraftfahrzeuges 10 hinter den für die Vermessung der vorderen Räder 12, 14 vorgesehenen Messgeräten 26, 28 installiert. Bewegt sich das Kraftfahrzeug 10 auf den Aufstandsflächen 21 vom Messplatz in Einfahrtsrichtung nach vorn herunter, wird mindestens ein Signalstrahl 96 der Detektiereinheit 90 verändert bzw. unterbrochen und ein abschließendes Signal an die Messgeräte 22, 24, 26, 28 gegeben, welches zum Beenden der Messung mit den Bildaufnahmeeinheiten 32, 34, 36, 38 und zum Beenden der Kalibrierung durch die Längs- und Querreferenziereinheiten 52, 53, 54, 55, 56, 57, 58, 59 genutzt wird.

In einem alternativen Verfahren zum Beenden der Messungen ist vorgesehen, die Aufnahmen der Bildaufnahmeeinheiten 32, 34, 36, 38 zu nutzen, um zu erkennen, dass sich das zu vermessende Fahrzeug aus dem Messbereich herausbewegt hat. Dies kann bereits bei der Auswertung im Rahmen der Radvermessungsalgorithmen geschehen. Es sind auch allgemein bekannte Bildverarbeitungstechniken geeignet, um zu erkennen, dass das Messobjekt den Bildbereich aller Messkameras 41 verlassen hat.

Eine weitere Variante des bisher beschriebenen Verfahrens dient der Bestimmung der Fahrtrichtung und Geschwindigkeit des Kraftfahrzeuges 10 auf dem Messplatz. Bewegt sich ein Kraftfahrzeug 10 auf den Aufstandsflächen 21 des Messplatzes durch mindestens zwei in Einfahrtrichtung des Kraftfahrzeuges 10 hintereinander liegende Lichtstrahlen der gegenüberliegenden Querreferenziereinheiten 52, 54 oder 56, 58, so lässt sich aus der Reihenfolge der Unterbrechung der Lichtstrahlen 81, 82, 83, 84, 85, 86, 87, 88 die Fahrtrichtung des Kraftfahrzeuges 10 berechnen. Bestimmt man beim gleichen Vorgang die Zeit zwischen der Verdunklung von mindestens zwei in Einfahrtrichtung des Kraftfahrzeugs 10 hintereinander liegenden Lichtstrahlen 81, 82, 83, 84, 85, 86, 87, 88, so lässt sich die Geschwindigkeit des Kraftfahrzeugs 10 berechnen. Die Geschwindigkeit des Kraftfahrzeuges 10 kann in einem weiteren Schritt zur Bestimmung eines Zeitfensters für die Messung mit den Bildaufnahmeeinheiten 32, 34, 36, 38 eingesetzt werden. Des Weiteren lässt sich aus der Geschwindigkeit des Kraftfahrzeugs 10 und den Signalen der Querreferenziereinheiten 52, 54, 56, 58 die optimal Bildaufnahmefrequenz und/oder Anzahl der Bildaufnahmen berechnen.

Eine Weiterentwicklung des Verfahrens ergibt sich aus den Datensätzen für die Geschwindigkeit und Richtung des Kraftfahrzeuges 10 auf dem Messplatz. Diese Daten können für Plausibilitätsprüfungen eingesetzt werden, in der Art, dass kontrolliert wird, ob sich ein Kraftfahrzeug 10, ein anderer Gegenstand oder eine Person auf dem Messplatz befindet. Somit kann der Beginn einer unerwünschten Kalibrierung des Messsystems durch die Längs- und Querreferenziereinheiten 52, 54, 56, 58, 53, 55, 57, 59 und der Beginn einer unerwünschten Messung mit den Bildaufnahmeeinheiten 32, 34, 36, 38 vermieden werden.

## Patentansprüche

1. Verfahren zur Steuerung eines Messsystems an einem Messplatz einer Fahrwerksvermessungseinrichtung oder einer Kraftfahrzeugprüfstraße mit mindestens zwei in Einfahrtsrichtung des Kraftfahrzeugs (10) hintereinander angeordneten ersten und zweiten Detektiereinheiten (42, 44, 46, 48, 90, 91) zum automatischen Erkennen eines Kraftfahrzeuges (10) im Messplatz, wobei mindestens eine relative Position des Kraftfahrzeuges (10) zu mindestens einem Messgerät (22, 24, 26, 28) anhand wenigstens eines ersten bzw. zweiten Signals mindestens einer der ersten bzw. zweiten Detektiereinheiten (42, 44, 46, 48, 90, 91) ermittelt wird, wobei das mindestens eine Messgerät (22, 24, 26, 28) eine Bildaufnahmeeinheit (32, 34, 36, 38) aufweist,
**dadurch gekennzeichnet, dass** auf Grund wenigstens des ersten Signals der in Einfahrtsrichtung des Kraftfahrzeuges (10) ersten Detektiereinheit (42, 44, 90) ein Betriebszustand des Messgerätes (22, 24, 26, 28) aktiviert wird, in dem das Messgerät (22, 24, 26, 28) kalibriert wird, und dass auf Grund wenigstens des dem wenigstens einen ersten Signal zeitlich nachgeordneten zweiten Signals der zweiten Detektiereinheit (46, 48), die in der Einfahrtsrichtung des Kraftfahrzeugs (10) hinter der ersten Detektiereinheit (42, 44, 90) angeordnet ist, die Bildaufnahme der Bildaufnahmeeinheit (32, 34, 36, 38) an mindestens zwei gegenüberliegenden Messgeräten (22, 24, 26, 28) gestartet wird.

2. Verfahren nach Anspruch 1, **dadurch gekennzeichnet, dass** das Versetzen einer Bildaufnahmeeinheit (32, 34, 36, 38) in den Betriebszustand den Vorgang der Anpassung der Bildaufnahmeparameter an die Umgebungsbedingungen enthält.

3. Verfahren nach Anspruch 1 oder 2, **dadurch gekennzeichnet, dass** auf Grund mindestens eines wiederholten Signals einer in Einfahrtrichtung des Kraftfahrzeuges (10) ersten oder zweiten Detektiereinheit (42, 44, 46, 48, 91) die Bildaufnahme der Bildaufnahmeeinheit (32, 34, 36, 38) an mindestens einem Messgerät (22, 24, 26, 28) beendet wird.

4. Verfahren nach Anspruch 1, **dadurch gekennzeichnet, dass** durch die Signale der mindestens zwei in Einfahrtsrichtung des Kraftfahrzeugs (10) hintereinander angeordneten Detektiereinheiten (42, 44, 46, 48) die Richtung und/oder Geschwindigkeit des Kraftfahrzeugs (10) ermittelt wird.

5. Verfahren nach Anspruch 4, **dadurch gekennzeichnet, dass** durch die Berechnung der Geschwindigkeit des Kraftfahrzeuges (10) ein Zeitfenster für die Aktivierung der Bildaufnahmeeinheit (32, 34, 36, 38) bestimmt wird.

6. Verfahren nach Anspruch 5, **dadurch gekennzeichnet, dass** mit Hilfe der ermittelten Datensätze für Geschwindigkeit und/oder Richtung des Kraftfahrzeuges (10), eines anderen Gegenstandes oder einer im Messplatz befindlichen Person eine Plausibilitätsprüfung durchgeführt wird.

7. Messsystem für einen Messplatz einer Fahrwerksvermessungseinrichtung oder Kraftfahrzeugprüfstrasse mit mindestens zwei sich gegenüberliegenden Messgeräten (22, 24, 26, 28), die jeweils eine Bildaufnahmeeinheit (32, 34, 36, 38) und eine Querreferenziereinheit (52, 54, 56, 58) aufweisen und die jeweils mit einer Auswerteeinheit (11) verbunden sind, und mit mindestens zwei in Einfahrtsrichtung des Kraftfahrzeugs (10) hintereinander angeordneten ersten und zweiten Detektiereinheiten (42, 44, 46, 48, 90, 91) zum automatischen Erkennen eines Kraftfahrzeugs (10) im Messplatz, wobei mindestens eine relative Position des Kraftfahrzeugs (10) zu den Messgeräten (22, 24, 26, 28) anhand wenigstens eines ersten bzw. zweiten Signals mindestens einer der ersten bzw. zweiten Detektiereinheiten (42, 44, 46, 48, 90, 91) ermittelt wird;
**dadurch gekennzeichnet, dass** das Messsystem derart ausgebildet ist, dass auf Grund wenigstens eines ersten Signals der in Einfahrtsrichtung des Kraftfahrzeuges (10) ersten Detektiereinheit (42, 44, 90) ein Betriebszustand des Messgerätes (22, 24, 26, 28) aktiviert wird, in dem das Messgerät (22, 24, 26, 28) kalibriert wird, und dass auf Grund wenigstens des dem wenigstens einen ersten Signal zeitlich nachgeordneten zweiten Signals der zweiten Detektiereinheit (46, 48), die in der Einfahrtsrichtung der Kraftfahrzeugs (10) hinter der ersten Detektiereinheit (42, 44, 90) angeordnet ist, die Bildaufnahme der Bildaufnahmeeinheit (32, 34, 36, 38) an mindestens zwei gegenüberliegenden Messgeräten (22, 24, 26, 28) gestartet wird.

8. Messsystem nach Anspruch 7, **dadurch gekennzeichnet, dass** mindestens eine der Detektiereinheiten (42, 44, 46, 48) von einer der Querreferenziereinheiten (52, 54, 56, 58) gebildet ist, indem eine Referenzierkamera (62, 64, 66, 68) der Querreferenziereinheit (52, 54, 56, 58) des einen Messgerätes (22, 24, 26, 28) den Empfänger und mindestens eine als Referenziertarget ausgebildete LED (71, 72, 73, 74, 75, 76, 77, 78) des gegenüberliegenden Messgerätes (22, 24, 26, 28) den Sender der Detektiereinheit (42, 44, 46, 48) bildet.

9. Messsystem nach Anspruch 7 oder 8, **dadurch gekennzeichnet, dass** die in Einfahrtrichtung des Kraftfahrzeugs (10) erste Detektiereinheit (42, 44) von zwei gegenüberliegenden Querreferenziereinheiten (52, 54), welche in den Messgeräten (22, 24) mit den Bildaufnahmeeinheiten für die hinteren Räder des Kraftfahrzeugs (10) enthalten sind, und die in Einfahrtrichtung des Kraftfahrzeugs (10) zweiten Detektiereinheit (46, 48) von zwei sich gegenüberliegenden Querreferenziereinheiten (56, 58), welche in den Messgeräten (26, 28) mit den Bildaufnahmeeinheiten für die vorderen Räder (12, 14) enthalten sind, gebildet ist.

10. Messsystem nach Anspruch 7, 8 oder 9, **dadurch gekennzeichnet, dass** eine Detektiereinheit (91) in Einfahrtsrichtung des Kraftfahrzeugs (10) vor mindestens zwei gegenüberliegenden Messgeräten (22, 24, 26, 28) angeordnet ist und dass anhand eines Signals der Detektiereinheit (91) die Kalibrierung und/oder die Bildaufnahme gestartet wird.

11. Messsystem nach Anspruch 7, 8 oder 9, **dadurch gekennzeichnet, dass** eine Detektiereinheit (90) in Einfahrtsrichtung des Kraftfahrzeugs (10) hinter zwei gegenüberliegenden Messgeräten (22, 24, 26, 28) angeordnet ist, und dass anhand eines Signals der Detektiereinheit (90) die Kalibrierung und/oder Bildaufnahme beendet wird.

## Claims

1. A method of controlling a measuring system at a measuring station of a wheel alignment measuring device or a motor vehicle test track with at least two, first and second, detection units (42, 44, 46, 48, 90, 91) for automatic - ally detecting a motor vehicle (10) in the measuring station, said detection units being arranged in succession in the drive-in direction of the motor vehicle (10), wherein at least one relative position of the motor vehicle (10) to at least one measuring device (22, 24, 26, 28) is determined on the basis of at least one first and second signal, respectively, of at least one of said first and second detection units (42, 44, 46, 48, 90, 91), respectively,
said at least one measuring device (22, 24, 26, 28) comprising an image re - cording unit (32, 34, 36, 38)
**characterized in that**, on the basis of at least said first signal of the first de - tection unit (42, 44, 90) in the drive-in direction of the motor vehicle (10), an operating state of the measuring device (22, 24, 26, 28) is activated in which said measuring device (22, 24, 26, 28) is calibrated, and that on the basis at least of said second signal, following in time said at least one first signal, of the second detection unit (46, 48) arranged behind said first de - tection unit (42, 44, 90) in the drive-in direction of the motor vehicle (10), im - age recording of the image recording unit (32, 34, 36, 38) is started on at least two opposite measuring devices (22, 24, 26, 28).

2. The method according to claim 1,
**characterized in that** placing an image recording unit (32, 34, 36, 38) into the operating state comprises the process of matching the image recording parameters to the environmental conditions.

3. The method according to claim 1 or 2,
**characterized in that**, on the basis of at least one repeated signal of a first or second detection unit (42, 44, 46, 48, 91) in the drive-in direction of the motor vehicle (10), the image recording of the image recording unit (32, 34, 36 , 38) is terminated on at least one measuring device (22, 24, 26, 28).

4. The method of claim 1,
**characterized in that** the direction and/or speed of the motor vehicle (10) is determined by the signals of the at least two detection units (42, 44, 46, 48) arranged in succession in the drive-in direction of the motor vehicle (10).

5. The method according to claim 4,
**characterized in that** by calculating the speed of the motor vehicle (10) a time window for the activation of the image recoding unit (32, 34, 36, 38) is determined.

6. The method according to claim 5,
**characterized in that** a plausibility check is performed with the aid of the de - termined data sets for speed and/or direction of the motor vehicle (10), an - other object or a person in the measuring station.

7. A measuring system for a measuring station of a wheel alignment measuring device or a motor vehicle test track comprising at least two opposite measuring devices (22, 24, 26, 28) each including an image recording unit (32, 34, 36, 38) and a cross-referencing unit (52, 54, 56, 58) and each con - nected to an evaluation unit (11), and comprising at least two, first and second, detection units (42, 44, 46, 48, 90, 91) for automatically detecting a motor vehicle (10) in the measuring station, said detection units being arranged in succession in the drive-in direction of the motor vehicle (10), wherein at least one relative position of the motor vehicle (10) to the meas - uring devices (22, 24, 26, 28) is determined on the basis of at least one first and second signal, respectively, of at least one of said first and second de - tection units (42, 44, 46, 48, 90, 91), respectively;
**characterized in that** said measuring system is designed such that, on the basis of at least said first signal of the first detection unit (42, 44, 90) in the drive-in direction of the motor vehicle (10), an operating state of the measur - ing device (22, 24, 26, 28) is activated in which said measuring device (22, 24, 26, 28) is calibrated, and
that on the basis of the at least one second signal, following in time said at least one first signal, of the second detection unit (46, 48) arranged follow - ing said first detection unit (42, 44, 90) in the drive-in direction of the motor vehicle (10), image recording of the image recording unit (32, 34, 36, 38) is started on at least two opposite measuring devices (22, 24, 26, 28).

8. The measuring system according to claim 7,
**characterized in that** at least one of the detection units (42, 44, 46, 48) is constituted by one of the cross-referencing units (52, 54, 56, 58) **in that** a referencing camera (62, 64, 66, 68) of the cross-referencing unit (52, 54, 56, 58) of one measuring device (22, 24, 26, 28) constitutes the receiver and at least one LED (71, 72, 73, 74, 75, 76, 77, 78), designed as referen - cing target, of the opposite measuring device (22, 24, 26, 28) constitutes the transmitter of the detection unit (42, 44, 46, 48).

9. The measuring system according to claim 7 or 8,
**characterized in that** first detection unit (42, 44) in the drive-in direction of the motor vehicle (10) is constituted by two opposing cross-referencing units (52, 54) which are included in the measuring devices (22, 24) with the im - age recording units for the rear wheels of the motor vehicle (10), and the second detection unit (46, 48) in the drive-in direction of the motor vehicle (10) is constituted by two opposing cross-referencing units (56, 58) which are included in the measuring devices (26, 28) with the image recording units for the front wheels (12, 14).

10. The measuring system according to claim 7, 8 or 9,
**characterized in that** one detection unit (91), in the drive-in direction of the motor vehicle (10), is arranged in front of at least two opposing measuring devices (22, 24, 26, 28) and that the calibration and/or image recording is started on the basis of a signal of the detection unit (91).

11. The measuring system according to claim 7, 8 or 9,
**characterized in that** one detection unit (90), in the drive-in direction of the motor vehicle (10), is arranged behind two opposing measuring devices (22, 24, 26, 28), and that the calibration and/or image recording is terminated on the basis of a signal of the detection unit (90).

## Revendications

1. Procédé de commande d'un système de mesure sur le poste de mesure d'un dispositif de contrôle de la géométrie d'un châssis ou d'une ligne de test de véhicules automobiles, avec au moins deux unités de détection (42, 44, 46, 48, 90, 91), une première et une deuxième, disposées l'une derrière l'autre dans le sens d'entrée du véhicule (10), pour la reconnaissance automatique d'un véhicule (10) dans le poste de mesure, procédé consistant à déterminer au moins une position relative du véhicule (10) par rapport à au moins un appareil de mesure (22, 24, 26, 28) à l'aide d'au moins un premier respectivement deuxième signal d'au moins une première respectivement deuxième unité de détection (42, 44, 46, 48, 90, 91), sachant que l'appareil de mesure (22, 24, 26, 28), un au moins, présente une unité de prise de vue (32, 34, 36, 38),
**caractérisé en ce que**, suite au premier signal au moins de la première unité de détection (42, 44, 90) située dans le sens d'entrée du véhicule (10), un état de marche de l'appareil de mesure (22, 24, 26, 28) est activé, où l'appareil de mesure (22, 24, 26, 28) est calibré, et **en ce que**, suite au deuxième signal au moins de la deuxième unité de détection (46, 48) disposée dans le sens d'entrée du véhicule (10) derrière la première unité de détection (42, 44, 90), signal décalé dans le temps par rapport au premier signal, un au moins, la prise de vue de l'unité de prise de vue (32, 34, 36, 38) est lancée sur au moins deux appareils de mesure (22, 24, 26, 28) se faisant face.

2. Procédé selon la revendication 1, **caractérisé en ce que** le déplacement d'une unité de prise de vue (32, 34, 36, 38) en état de marche comprend la procédure d'adaptation des paramètres de prise de vue aux conditions ambiantes.

3. Procédé selon la revendication 1 ou 2, **caractérisé en ce que**, suite à au moins un signal renouvelé d'une unité de détection, la première ou la deuxième (42, 44, 46, 48, 91) dans le sens d'entrée du véhicule (10), la prise de vue de l'unité de prise de vue (32, 34, 36, 38) est terminée sur au moins un appareil de mesure (22, 24, 26, 28).

4. Procédé selon la revendication 1, **caractérisé en ce que** les signaux des unités de détection (42, 44, 46, 48), deux au moins, disposées l'une derrière l'autre dans le sens d'entrée du véhicule (10), permettent de déterminer la direction et/ou la vitesse du véhicule (10).

5. Procédé selon la revendication 4, **caractérisé en ce que** le calcul de la vitesse du véhicule (10) permet de définir une fenêtre temporelle pour l'activation de l'unité de prise de vue (32, 34, 36, 38).

6. Procédé selon la revendication 5, **caractérisé en ce que**, à l'aide des ensembles de données déterminés pour la vitesse et/ou la direction du véhicule (10), d'un autre objet ou d'une personne se trouvant dans le poste de mesure, un contrôle de plausibilité est effectué.

7. Système de mesure pour un poste de mesure d'un dispositif de contrôle de la géométrie d'un châssis ou d'une ligne de test de véhicules automobiles avec au moins deux appareils de mesure (22, 24, 26, 28) se faisant face, qui présentent chacun une unité de prise de vue (32, 34, 36, 38) et une unité de référencement croisé (52, 54, 56, 58) et qui sont chacun connectés à une unité d'évaluation (11), et avec au moins deux unités de détection (42, 44, 46, 48, 90, 91), une première et une deuxième, disposées l'une derrière l'autre dans le sens d'entrée du véhicule (10), pour la reconnaissance automatique d'un véhicule (10) dans le poste de mesure, où au moins une position relative du véhicule (10) par rapport aux appareils de mesure (22, 24, 26, 28) est déterminée à l'aide d'au moins un premier ou deuxième signal d'au moins l'une des deux unités de détection (42, 44, 46, 48, 90, 91), la première ou la deuxième ;
**caractérisé en ce que** le système de mesure est constitué de telle sorte que, suite à au moins un premier signal de la première unité de détection (42, 44, 90) dans le sens d'entrée du véhicule (10), un état de marche de l'appareil de mesure (22, 24, 26, 28) est activé, où l'appareil de mesure (22, 24, 26, 28) est calibré, et que, suite au deuxième signal au moins de la deuxième unité de détection (46, 48) disposée dans le sens d'entrée du véhicule (10) derrière la première unité de détection (42, 44, 90), signal décalé dans le temps par rapport au premier signal, un au moins, la prise de vue de l'unité de prise de vue (32, 34, 36, 38) est lancée sur au moins deux appareils de mesure (22, 24, 26, 28) se faisant face.

8. Système de mesure selon la revendication 7, **caractérisé en ce qu'**au moins une des unités de détection (42, 44, 46, 48) est formée de l'une des unités de référencement croisé (52, 54, 56, 58), dans le sens où une caméra de référencement (62, 64, 66, 68) de l'unité de référencement croisé (52, 54, 56, 58) d'un appareil de mesure (22, 24, 26, 28) constitue le récepteur, et où au moins une LED (71, 72, 73, 74, 75, 76, 77, 78) conçue comme cible de référencement de l'appareil de mesure faisant face (22, 24, 26, 28), constitue l'émetteur de l'unité de détection (42, 44, 46, 48).

9. Système de mesure selon la revendication 7 ou 8, **caractérisé en ce que** la première unité de détection (42, 44) dans le sens d'entrée du véhicule (10) est constituée de deux unités de référencement croisé se faisant face (52, 54) qui sont contenues dans les appareils de mesure (22, 24) avec les unités de prise de vue pour les roues arrière du véhicule (10), et que la deuxième unité de détection (46, 48) dans le sens d'entrée du véhicule (10) est constituée de deux unités de référencement croisé se faisant face (56, 58) qui sont contenues dans les appareils de mesure (26, 28) avec les unités de prise de vue pour les roues avant (12, 14).

10. Système de mesure selon la revendication 7, 8 ou 9, **caractérisé en ce qu'**une unité de détection (91) dans le sens d'entrée du véhicule (10) est disposée devant au moins deux appareils de mesure (22, 24, 26, 28) se faisant face et que, sur la base d'un signal de l'unité de détection (91), le calibrage et/ou la prise de vue sont lancés.

11. Système de mesure selon la revendication 7, 8 ou 9, **caractérisé en ce qu'**une unité de détection (90) dans le sens d'entrée du véhicule (10) est disposée derrière deux appareils de mesure (22, 24, 26, 28) se faisant face et que, sur la base d'un signal de l'unité de détection (90), le calibrage et/ou la prise de vue sont terminés.
